Europäisches Patentamt

European Patent Office

Office européen des brevets

(19)

(11) EP 1 586 898 A1

## (12) EUROPEAN PATENT APPLICATION
published in accordance with Art. 158(3) EPC

(43) Date of publication:
19.10.2005 Bulletin 2005/42

(21) Application number: 04703892.2

(22) Date of filing: 21.01.2004

(51) Int Cl.⁷: $G01N\ 33/48$, $B01J\ 20/26$

(86) International application number:
PCT/JP2004/000480

(87) International publication number:
WO 2004/065958 (05.08.2004 Gazette 2004/32)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 22.01.2003 JP 2003013754
11.04.2003 JP 2003108163

(71) Applicant: SEKISUI CHEMICAL CO., LTD.
Osaka-shi, Osaka 530 (JP)

(72) Inventors:
• UJI, Yoshinori
Kumamoto-city, Kumamoto 860-0844 (JP)

• TOGAWA, Katsuya
c/o SEKISUI CHEMICAL CO., LTD.
Yamaguchi 746-0006 (JP)
• ISOGAWA, Hironobu,
c/o SEKISUI CHEMICAL CO., LTD.
Yamaguchi 746-0006 (JP)

(74) Representative:
TER MEER - STEINMEISTER & PARTNER GbR
Mauerkircherstrasse 45
81679 München (DE)

(54) **FILTER FOR REMOVING FIBRINOGEN, FILTER DEVICE FOR REMOVING FIBRINOGEN, AND METHOD OF REMOVING FIBRINOGEN USING THE SAME**

(57) It is intended to provide a filter for removing fibrinogen and a filter device for removing fibrinogen and a method of removing fibrinogen using the same by which a serum sample not affecting blood examination data can be quickly prepared from plasma. A filter for removing fibrinogen from plasma which is made of a fiber mass, microparticles or a porous polymer capable of adsorbing fibrinogen, has a surface area of 0.5 m²/g or larger and a porosity of 85% or lower.

FIG. 1

EP 1 586 898 A1

**Description**

**TECHNICAL FIELD**

The present invention relates to a method of removing fibrinogen contained in serum or plasma and a member therefore.

**BACKGROUND ART**

Blood examinations are widely used in order to diagnose diseases in laboratory tests. Many blood examinations are serum examinations, and serumrequired in these examinations is usually separated from a clot having different specific gravity (that is, a gel-like mass containing a mixture of fibrin and blood-cell components) by coagulating blood collected in a blood examination container and then centrifuging it. A coagulation-promoting component is added to the blood examination container in order to coagulate blood, and as the coagulation-promoting component, an adsorptive inorganic material has been conventionally used, but recently an enzyme such as thrombin and venom is used to reduce the coagulation time thus reducing the time necessary for obtaining examination results thereby improving convenience.

On one hand, an anti-coagulant is administered into blood of patients undergoing dialysis who are increasing year by year, thus making the coagulation time extraordinarily long and significantly prolonging the time for preparing their samples. For this problem, a blood coagulation-promoting agent wherein a component neutralizing heparin as an anti-coagulant is used in combination with a coagulation-promoting component has been developed and contributed to reduction in coagulation time (see JP-A No. 62-240617 and JP-A No. 63-275953).

However, even if coagulation is completed by using the blood coagulation-promoting agent to lose the fluidity of blood, fibrin can be precipitated gradually in serum after centrifugation, and a nozzle of an examination device is often clogged with the fibrin.

Accordingly, a method of obtaining serum by removing fibrinogen contained in plasma by using a high-molecular fiber mass rendered hydrophilic has been developed as described in JP-A No. 2000-309539.

In the method described in JP-A No. 2000-309539 supra, however, protein such as albumin contained in plasma may also be simultaneously removed by adsorption, and thus there is a problem that a sample obtained by this method cannot be subjected to blood examination where such substance is a subject of examination.

**DISCLOSURE OF THE INVENTION**

In view of the circumstances described above, the object of the present invention is to provide a filter for removing fibrinogen and a filter device for removing fibrinogen, by which a serum sample not affecting results of blood examination can be rapidly prepared from plasma, and a method of removing fibrinogen by using the same.

A first aspect of the present invention is concerned with a filter for removing fibrinogen from plasma, which comprises a fiber mass, microparticles or a porous polymer capable of adsorbing fibrinogen, and has a surface area of 0.5 $m^2$/g or larger and a porosity of 85% or lower.

A second aspect of the present invention is concerned with a filter device for removing fibrinogen from plasma, which comprises a cylindrical container charged with a fiber mass, microparticles or a porous polymer capable of adsorbing fibrinogen.

Hereinafter, the present invention is described in more detail.

The filter for removing fibrinogen in the first aspect of the invention is to remove fibrinogen from plasma.

The plasma is obtained usually by centrifuging anti-coagulant-containing blood to precipitate blood cells, and recovering the resulting transparent, pale yellow supernatant.

In the present invention, the plasma includes serum containing fibrinogen mixed therein.

The filter for removing fibrinogen in the first aspect of the present invention comprises a fiber mass, microparticles or a porous polymer capable of adsorbing fibrinogen.

The fiber mass, microparticles or porous polymer capable of adsorbing fibrinogen is not particularly limited and may be made of any material insofar as it is capable of adsorbing fibrinogen. However, the filter for removing fibrinogen in the first aspect of the invention is used in blood examination, and should thus not contain metal salts such as those of iron, zinc, magnesium, aluminum etc. or sodium ion, potassium ion, chloride ion etc. in such an amount as to affect the examination. This also applies to organic matter etc.

The fiber mass, microparticles or porous polymer capable of adsorbing fibrinogen is made of, for example, polyester-based resin such as polyethylene terephthalate, polybutylene terephthalate etc., nylon resin, polyurethane resin, polystyrene-based resin, homo- or copolymer resin of poly(meth)acrylates such as polymethyl methacrylate, and copolymer resin of polyethylene and vinyl acetate or (meth)acrylates. These may be used singly or as a mixture of two or more thereof. The filter composed of the polyester-based resin among these resins is preferably used from the viewpoint of the balance between the performance of adsorbing fibrinogen and the influence of the filter on measurements of samples after treatment.

Generally a material adsorbing fibrinogen is liable to adsorb other hydrophobic proteins. Accordingly, the surface of the filter made of the fiber mass, microparticles or porous polymer capable of adsorbing fibrinogen should be subjected to hydrophilization treatment depending on the case, in order to control surface properties. The hydrophilizating agent is not particularly limited, and includes, for example, hydrophilic synthetic polymers and naturally occurring water-soluble polymers such as polyvinyl alcohol, polyvinyl pyrrolidone etc. and polymer surfactants such as polyether-modified silicone etc.

The filter for removing fibrinogen in the first aspect of the invention has a surface area of 0.5 m$^2$/g or larger and a porosity of 85% or lower.

As the surface area of the filter is increased, the efficiency of removal of fibrinogen is improved, while as the surface area is less than 0.5 m$^2$/g, more filters are necessary to remove fibrinogen, thus increasing costs. When the porosity is higher than 85%, the yield of plasma is reduced. Preferably, the surface area is 0.7 m$^2$/g or larger and the porosity is 80% or lower.

The surface area of the filter for removing fibrinogen is determined from average fiber diameter, fiber weight, and density by the following formula (1):

$$\text{Surface area} = (4 \times \text{fiber weight}) / (\text{material density} \times \text{average fiber diameter}) \tag{1}$$

The porosity is determined from filter material density, weight, and volume after compression by the following formula (2):

$$\text{Porosity} = \{1 - \text{weight}/(\text{material density} \times \text{volume after compression})\} \times 100 \tag{2}$$

The filter for removing fibrinogen in the first aspect of the invention is preferably the one adsorbing 1 mg or more fibrinogen per g of the filter. When the amount of fibrinogen adsorbed per g of the filter is less than 1 mg, more filters are necessary for attaining necessary performance of adsorbing fibrinogen, which may result in a reduction in the amount of plasma recovered.

Using the filter for removing fibrinogen in the first aspect of the invention, fibrinogen can be removed from plasma. The method of removing fibrinogen by using the filter for removing fibrinogen in the first aspect of the invention also constitutes one aspect of the invention.

The filter device for removing fibrinogen in the second aspect of the invention is to remove fibrinogen from plasma.

The filter device for removing fibrinogen in the second aspect of the invention has a structure wherein a fiber mass, microparticles or a porous polymer capable of adsorbing fibrinogen is charged in a tubular container. The tubular container has an opening in the top and bottom respectively, in which the fiber mass, microparticles or porous polymer capable of adsorbing fibrinogen is charged and fixed.

The tubular container preferably has a cylindrical shape, but may have another cylindrical shape such as prism. For fixing the fiber mass, microparticles or porous polymer capable of adsorbing fibrinogen, the diameter of an opening at the bottom of the container may be small-sized and a fixing partition plate, an ancillary material etc. may be inserted into the container.

The fiber mass, microparticles and porous polymer capable of adsorbing fibrinogen are the same as in the filter for removing fibrinogen in the first aspect of the invention.

For removing fibrinogen from plasma by using the filter device for removing fibrinogen in the second aspect of the invention, plasma is first injected into a tubular container of the filter device for removing fibrinogen in the second aspect of the invention, and then pressurized from the plasma injection side or suctioned from the filtered-plasma outlet side, thereby passing plasma through the fiber mass, microparticles or porous polymer capable of adsorbing fibrinogen.

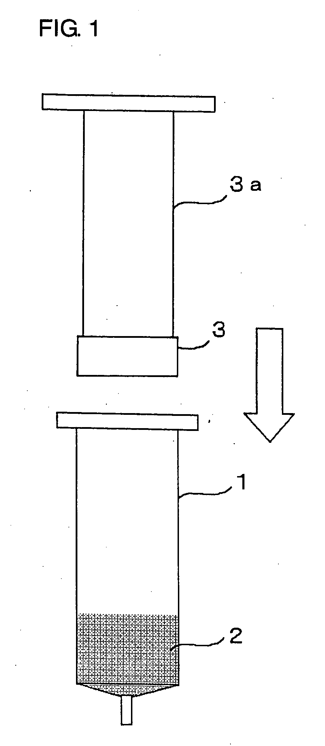

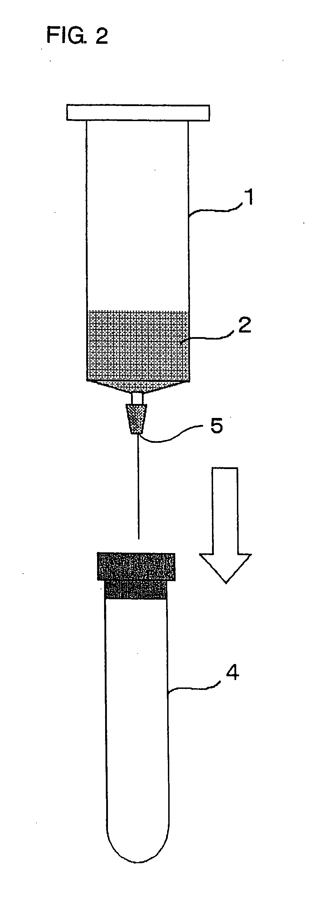

The pressurizing method is not particularly limited, and for example, a method of using a piston as shown in Fig. 1 can be mentioned. The suctioning method is not particularly limited, and for example, a method that involves inserting the filtered-plasma outlet side of the device into a tube depressurized therein, as shown in Fig. 2, can be mentioned.

In the filter device shown in Fig. 1, a fibrinogen adsorbent 2 consisting of a fiber mass, microparticles or a porous polymer capable of adsorbing fibrinogen is accommodated in a cylindrical container 1. The fibrinogen adsorbent 2 is preferably composed of the filter for removing fibrinogen in the first aspect of the invention. A piston 3 moving while contacting liquid-tightlywithan internal wall of the cylindrical container 1 is accommodated in the cylindrical container 1. The piston 3 is connected to a piston rod 3a.

In the filter device shown in Fig. 2, a fibrinogen adsorbent 2 consisting of a fiber mass, microparticles or a porous polymer capable of adsorbing fibrinogen is accommodated in a similarly constituted cylindrical container 1. The fibrinogen adsorbent 2 is preferably composed of the filter for removing fibrinogen in the first aspect of the present invention. An injection needle 5 is attached to the top of the cylindrical container 1. The injection needle 5 is allowed to pierce through the main body of a vacuum blood collection tube 4 into the inside of the vacuum blood collection tube 4. Accordingly, plasma poured into the cylindrical container 1 is introduced through the fibrinogen adsorbent 2 into the vacuum blood collection tube 4.

Another example of the method of removing fibrinogen from plasma by using the filter device for removing fibrinogen in the second aspect of the invention is that in a structure comprising a tubular (preferably cylindrical) container charged with a fibrinogen adsorbent made of a fiber mass, microparticles or a porous polymer capable of adsorbing fibrinogen, which is further provided with a piston capable of moving while contacting liquid-tightly with an internal surface of the tubular container and is provided in the tubular container with a plasma suctioning opening in the opposite side to the piston of the fibrinogen adsorbent, the piston is transferred to become more distant from the plasma suctioning opening to suction plasma into the tubular container, thereby passing the plasma through the fiber mass, microparticles or porous polymer, resulting in removing fibrinogen. In this method, bubbles are hardly generated in the collected plasma.

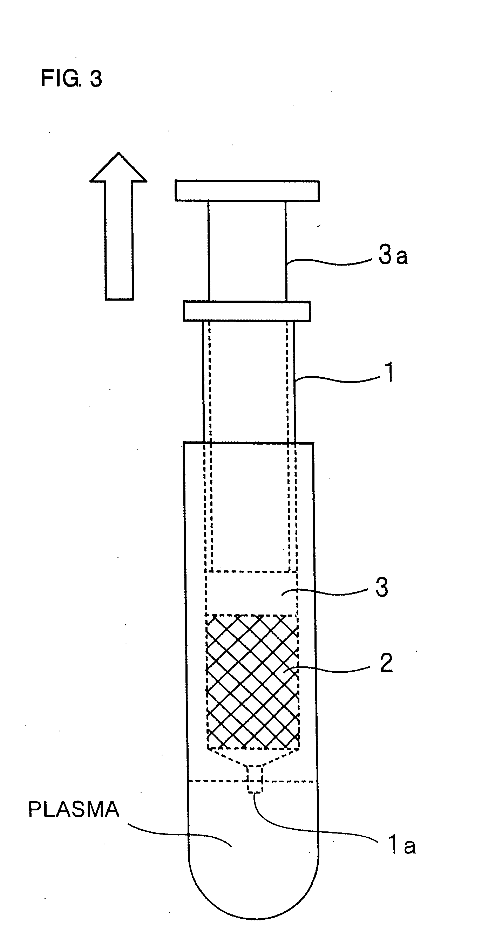

An example of the structure of the filter device for removing fibrinogen used in the method of removing fibrinogen wherein bubbles are hardly generated as described above is shown in Fig. 3. In the structure shown in Fig. 3, the fibrinogen adsorbent 2 is accommodated in the cylindrical member 1. The fibrinogen adsorbent 2 is composed of a fiber mass, microparticles or a porous polymer, and is preferably constituted according to the first aspect of the invention. Piston 3 is arranged in an upper part of the fibrinogen adsorbent 2. The outer periphery of piston 3 is contacted liquid-tightly with the internal periphery of the cylindrical member 1. By operating a piston rod 39 connected to an upper part of piston 3, the piston 3 can move in the cylindrical member 1 in the lengthwise direction of the cylindrical member 1. On the other hand, a plasma suctioning opening 1a is arranged below the fibrinogen adsorbent 2, that is, in the opposite side to the side of the fibrinogen adsorbent 2 on which piston 3 is arranged. In this filter device, while the plasma suction opening 1a is dipped in plasma, piston 3 is transferred upwards, that is, piston 3 is transferred to become more distant from the plasma suctioning opening 1a, thus introducing the plasma by suction into the cylindrical member 1. In this case, the plasma is filtered through the fibrinogen adsorbent 2 to remove fibrinogen.

As described above, the method of removing fibrinogen from plasma by using the filter device for removing fibrinogen in the second aspect of the invention also constitutes one aspect of the invention.

## BRIEF DESCRIPTION OF THE DRAWINGS

Fig. 1 is a view showing a method wherein the filter device for removing fibrinogen is pressurized in the plasma injection side by using a piston.
Fig. 2 is a view showing a method wherein the filter device for removing fibrinogen is suctioned in the filtered-plasma outlet side by using a tube depressurized inside.
Fig. 3 is a schematic front view for explaining a method wherein plasma is filtered by suction with a piston arranged in a cylindrical member having a fibrinogen adsorbent arranged therein.

## BEST MODE FOR CARRYING OUT THE INVENTION

Hereinafter, the present invention is described in more detail by reference to the Examples, but the present invention is not limited to these examples.

Example 1

A plurality of nonwoven cloths made of polyethylene terephthalate having an average fiber diameter of 1.8 μm (pile density 40 g/m$^2$), each cloth being punched out in a diameter of 15 mm, were stacked, and 1.0 g specimen was weighed out therefrom. This specimen was charged into a 10-mL syringe manufactured by JMS and then pressurized so as to be compressed to a volume of 4 mL.

Example 2

A plurality of nonwoven cloths made of polyethylene terephthalate having an average fiber diameter of 1.8 μm (pile density 40 g/m$^2$), each cloth being punched out in a diameter of 15 mm , were stacked, and 1.0 g specimen was weighed out therefrom. This specimen was charged into a 10-mL syringe manufactured by JMS and then pressurized so as to be compressed to a volume of 3.2 mL.

Example 3

A plurality of nonwoven cloths made of polyethylene terephthalate having an average fiber diameter of 1. 8 μm (pile density 40 g/m$^2$), each cloth being punched out in a diameter of 15 mm, were stacked, and 1.0 g specimen was weighed out therefrom. This specimen was charged into a 10-mL syringe manufactured by JMS and then pressurized so as to be compressed to a volume of 2.4 mL.

Example 4

A plurality of nonwoven cloths made of polyethylene terephthalate having an average fiber diameter of 3.5 μm (pile density 40 g/m$^2$), each cloth being punched out in a diameter of 15 mm, were stacked, and 1.0 g specimen was weighed out therefrom. This specimen was charged into a 10-mL syringe manufactured by JMS and then pressurized so as to be compressed to a volume of 4 mL.

Example 5

A plurality of nonwoven cloths made of acryl/polyester (70%/30%) having an average fiber diameter of 3.5 μm (trade name: Shaleria C1040 (manufactured by Asahi Kasei Corp.), pile density 40 g/m$^2$), each cloth being punched out in a diameter of 15 mm, were stacked, and 1.0 g specimen was weighed out therefrom. This specimen was charged into a 10-mL syringe manufactured by JMS and then pressurized so as to be compressed to a volume of 2 mL.

Example 6

A plurality of nonwoven cloths made of acryl/rayon (65%/35%) having an average fiber diameter of 3. 5 μm (trade name: Shaleria CR040 (manufactured by Asahi Kasei Corp.), pile density 40 g/m$^2$), each cloth being punched out in a diameter of 15 mm, were stacked, and 1. 0 g specimen was weighed out therefrom. This specimen was charged into a 10-mL syringe manufactured by JMS and then pressurized so as to be compressed to a volume of 2 mL.

Comparative Example 1

A plurality of nonwoven cloths made of polyethylene terephthalate having an average fiber diameter of 1.8 μm (pile density 40 g/m$^2$), each cloth being punched out in a diameter of 15 mm, were stacked, and 1. 0 g specimen was weighed out therefrom. This specimen was charged into a 10-mL syringe manufactured by JMS and then pressurized so as to be compressed to a volume of 7 mL.

Comparative Example 2

A plurality of nonwoven cloths made of polyethylene terephthalate having an average fiber diameter of 6.5 μm (pile density 40 g/m$^2$), each cloth being punched out in a diameter of 15 mm , were stacked, and 1. 0 g specimen was weighed out therefrom. This specimen was charged into a 10-mL syringe manufactured by JMS and then pressurized so as to be compressed to a volume of 4 mL.

Comparative Example 3

A plurality of nonwoven cloths made of polypropylene having an average fiber diameter of 3.5 μm (trade name: Eltasguard (manufactured by Asahi Kasei Corp.), pile density 17 g/m$^2$), each cloth being punched out in a diameter of 15 mm, were stacked, and 1.0 g specimen was weighed out therefrom. This specimen was charged into a 10-mL syringe manufactured by JMS and then pressurized so as to be compressed to a volume of 2 mL.

Experimental Example 1

Human plasma containing fibrinogen at a concentration of 100 mg/dL was injected into the nonwoven cloth in the syringe of the filter device for removing fibrinogen obtained in each of Examples 1 to 6 and Comparative Examples 1 to 3, and then filtered by pressurization with a piston. The proportion of plasma which could be recovered after filtration and the amount of remaining fibrinogen were determined by a thrombin time method. The surface area of the filter of the filter device for removing fibrinogen obtained in each of Examples 1 to 6 and Comparative Examples 1 to 3 was calculated according to the formula (1) above, and the porosity was calculated according to the formula (2) above. The results are shown in Table 1.

Table 1

|  |  | Material | Surface Area ($m^2$/g) | Porosity (%) | Amount of Remaining Fibrinogen (mg/dL) | Plasma Recovery (%) |
|---|---|---|---|---|---|---|
|  | Ex. 1 | Polyethylene Terephthalate | 1.61 | 83.9 | 10 or Less | 55 |
|  | Ex. 2 | Polyethylene Terephthalate | 1.61 | 77.4 | 10 or Less | 63 |
|  | Ex. 3 | Polyethylene Terephthalate | 1.61 | 69.8 | 10 or Less | 68 |
|  | Ex. 4 | Polyethylene Terephthalate | 0.83 | 83.9 | 10 or Less | 51 |
|  | Ex. 5 | Acryl / Polyester | 0.83 | 83.9 | 10 or Less | 42 |
|  | Ex. 6 | Acryl / Rayon | 0.83 | 83.9 | 10 or Less | 40 |
|  | Comp. Ex. 1 | Polyethylene Terephthalate | 1.61 | 89.7 | 10 or Less | 20 |
|  | Comp. Ex. 2 | Polyethylene Terephthalate | 0.45 | 83.9 | 83 | 45 |
|  | Comp. Ex. 3 | Polypropylene | 0.83 | 83.9 | 92 | 67 |

**Experimental Example 2**

1.0 g nonwoven cloth used in each of Examples 1 to 6 and Comparative Examples 1 to 3 was weighed out and dipped in human plasma containing fibrinogen at a concentration of 235 mg/dL, and then the nonwoven cloth only was removed, and the concentration of fibrinogen in the remaining plasma was measured in the same manner as in Experimental Example 1, to determine the amount of fibrinogen adsorbed per g of the nonwoven cloth. The results are shown in Table 2.

Table 2

|  | Amount of Adsorbed Fibrinogen (mg/g) |
|---|---|
| Ex. 1 | 2.70 |
| Ex. 2 | 3.04 |
| Ex. 3 | 3.30 |
| Ex. 4 | 1.90 |
| Ex. 5 | 1.68 |
| Ex. 6 | 1.50 |
| Comp. Ex. 1 | 2.40 |
| Comp. Ex. 2 | 0.72 |

Table 2   (continued)

|  | Amount of Adsorbed Fibrinogen (mg/g) |
|---|---|
| Comp. Ex. 3 | 0.50 |

From the results in Experiments 1 and 2, it was revealed that when the filter having a surface area of 0.5 $m^2$/g or larger and a porosity of 85% or lower was used, fibrinogen was removed to the measurement limit or lower upon passage of 100 mg/mL plasma. When the surface area was lower than 0.5 $m^2$/g (Comparative Example 2), fibrinogen could not be completely removed, and when the porosity was 85% or larger (Comparative Example 1), the recovery of plasma was as very low as 20%. The amount of fibrinogen adsorbed was low depending on the material, and in Comparative Example 3 using polypropylene, fibrinogen could not be completely removed.

As shown in Table 3, there was no or less influence, on measurements, of the treatment for removing fibrinogen by the filter device for removing fibrinogen obtained in each of Examples 1, 4 and 5.

Table 3

|  | Unit | Control (Plasma) | Example 1 | Example 4 | Example 5 |
|---|---|---|---|---|---|
| Total Protein (TP) | g/dl | 5.5 | 5.4 | 5.4 | 5.4 |
| A/G |  | 1.6 | 1.7 | 1.8 | 1.7 |
| Albumin | g/dl | 3.4 | 3.4 | 3.5 | 3.4 |
| Total Bilirubin (T-bilirubin) | mg/dl | 0.1 | 0.1 | 0.1 | 0.1 |
| Direct Bilirubin (D-bilirubin) | mg/dl | 0.0 | 0.0 | 0.0 | 0.0 |
| GOT | IU/l | 17 | 18 | 17 | 17 |
| GPT | IU/l | 7 | 7 | 7 | 7 |
| ALP | IU/l | 233 | 235 | 231 | 232 |
| LDH | IU/l | 153 | 148 | 150 | 150 |
| Choline Esterase (ChE) | IU/l | 4285 | 4303 | 4280 | 4300 |
| γ-GTP | IU/l | 48 | 47 | 47 | 46 |
| LAP | IU/l | 46 | 45 | 46 | 45 |
| CPK | IU/l | 61 | 64 | 65 | 65 |
| Amylase (Blood) | IU/l | 50 | 49 | 50 | 51 |
| Total Lipid | mg/dl | 455 | 455 | 440 | 466 |
| LDL-Cholesterol (Direct) | mg/dl | 117 | 113 | 113 | 114 |
| β-Lipoprotein | mg/dl | 369 | 363 | 368 | 370 |
| Free Fatty Acid (NEFA) | mEq/l | 0.47 | 0.48 | 0.47 | 0.47 |
| Phospholipid (PL) | mg/dl | 185 | 177 | 182 | 181 |
| Uric Acid (UA) | mg/dl | 5.2 | 5.2 | 5.2 | 5.2 |
| Urea Nitrogen (BUN) | mg/dl | 7.2 | 7.0 | 7.3 | 7.3 |
| Creatine (CRE) | mg/dl | 0.79 | 0.77 | 0.77 | 0.77 |
| Na | mEq/l | 171 | 172 | 171 | 171 |
| Cl | mEq/l | 88 | 88 | 88 | 88 |
| K | mEq/l | 4.1 | 4.1 | 4.1 | 4.1 |
| Ca | mg/dl | 7.9 | 7.8 | 7.8 | 7.7 |
| Inorganic Phosphorus (IP) | mg/dl | 1.5 | 1.5 | 1.5 | 1.5 |
| Mg | mg/dl | 1.4 | 1.4 | 1.4 | 1.4 |

Table 3   (continued)

|  | Unit | Control (Plasma) | Example 1 | Example 4 | Example 5 |
|---|---|---|---|---|---|
| Serum Iron (Fe) | mg/dl | 54 | 56 | 54 | 56 |
| TIBC | μg/dl | 226 | 226 | 228 | 228 |
| UIBC | μ g/dl | 172 | 170 | 174 | 172 |

**INDUSTRIAL APPLICABILITY**

According to the present invention, fibrinogen only can be removed by adsorption without adsorbing and removing proteins other than fibrinogen contained in plasma, and thus examination results of samples after treatment are not affected, and the problem of frequent precipitation of fibrin in serum from a patient given heparin can be completely solved.

**Claims**

1.   A filter for removing fibrinogen from plasma, which comprises a fiber mass, microparticles or a porous polymer capable of adsorbing fibrinogen, the filter having a surface area of 0.5 $m^2$/g or larger and a porosity of 85% or lower.

2.   The filter for removing fibrinogen according to claim 1, which adsorbs fibrinogen in an amount of 1 mg or more per g of the filter.

3.   The filter for removing fibrinogen according to claim 1 or 2, wherein the fiber mass, microparticles or porous polymer capable of adsorbing fibrinogen comprises polyester-based resin.

4.   A method of removing fibrinogen from plasma, which comprises using the filter for removing fibrinogen according to claim 1, 2 or 3 to remove fibrinogen from plasma.

5.   A filter device for removing fibrinogen from plasma, which comprises a tubular container charged with a fiber mass, microparticles or a porous polymer capable of adsorbing fibrinogen.

6.   A method of removing fibrinogen, which comprises injecting plasma into the container of the filter device for removing fibrinogen according to claim 5 and then pressurizing it at a plasma injection side or suctioning it at a filtered-plasma outlet side, thereby passing plasma through a fiber mass, microparticles or a porous polymer capable of adsorbing fibrinogen.

7.   A method of removing fibrinogen, wherein in the tubular container of the filter device for removing fibrinogen according to claim 5, which is provided with a piston contacting liquid-tightly with an internal peripheral wall of the tubular container and capable of moving in the lengthwise direction of the tubular container, and is provided, in the tubular container, with a plasma suctioning opening in an opposite side to the side where the piston for the fiber mass, microparticles or porous polymer is arranged,
     the piston is transferred in such a direction as to become more distant from the plasma suctioning opening while the plasma suctioning opening is dipped in plasma, thus suctioning the plasma into the tubular container and passing the plasma through the fiber mass, microparticles or porous polymer.

FIG. 1

FIG. 2

FIG. 3

PLASMA

## INTERNATIONAL SEARCH REPORT

| International application No. |
| --- |
| PCT/JP2004/000480 |

**A.  CLASSIFICATION OF SUBJECT MATTER**
Int.Cl$^7$  G01N33/48, B01J20/26

According to International Patent Classification (IPC) or to both national classification and IPC

**B.  FIELDS SEARCHED**

Minimum documentation searched (classification system followed by classification symbols)
Int.Cl$^7$  G01N33/48, B01J20/26

Documentation searched other than minimum documentation to the extent that such documents are included in the fields searched
Jitsuyo Shinan Koho          1922–1996   Toroku Jitsuyo Shinan Koho    1994–2004
Kokai Jitsuyo Shinan Koho   1971–2004   Jitsuyo Shinan Toroku Koho   1996–2004

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | JP 2000-309539 A  (Toyobo Co., Ltd.),<br>07 November, 2000 (07.11.00),<br>(Family: none) | 1–7 |
| A | JP 11-285607 A  (Toyobo Co., Ltd.),<br>19 October, 1999 (19.10.99),<br>(Family: none) | 1–7 |
| A | JP 11-267463 A  (Toyobo Co., Ltd.),<br>05 October, 1999 (05.10.99),<br>(Family: none) | 1–7 |

☐  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 March, 2004 (29.03.04) | 13 April, 2004 (13.04.04) |

| Name and mailing address of the ISA/<br>Japanese Patent Office | Authorized officer |
| --- | --- |
| Facsimile No. | Telephone No. |

Form PCT/ISA/210 (second sheet) (January 2004)